Europäisches Patentamt

European Patent Office

Office européen des brevets

(11) Numéro de publication: **0 434 880 A1**

# DEMANDE DE BREVET EUROPEEN

(21) Numéro de dépôt: 89403652.4

(51) Int. Cl.5: **B60P 1/64**

(22) Date de dépôt: 26.12.89

(43) Date de publication de la demande:
**03.07.91 Bulletin 91/27**

(84) Etats contractants désignés:
**AT BE CH DE ES FR GB GR IT LI LU NL SE**

(71) Demandeur: **Daumer, Joseph**
**114 rue de l'Angellerie**
**F-53100 Mayenne(FR)**

(72) Inventeur: **Daumer, Joseph**
**114 rue de l'Angellerie**
**F-53100 Mayenne(FR)**

(74) Mandataire: **Phélip, Bruno et al**
**c/o Cabinet Harlé & Phélip 21, rue de La**
**Rochefoucauld**
**F-75009 Paris(FR)**

(54) Dispositif de manutention d'une charge portée par un véhicule.

(57) Le dispositif de manutention comporte, disposé transversalement par rapport à l'axe longitudinal du bâti (1) du véhicule, et dans la partie médiane de ce bâti, un bras primaire (7) interposé entre ledit bâti (1) et la charge C, lequel bras (7) est d'une part, à l'une de ses extrémités, articulé autour d'un axe longitudinal (8) positionné en bordure dudit véhicule ou de la remorque et, à l'autre extrémité, muni d'un sppoort (12) destiné à recevoir des moyens de levage de ladite charge C qui, coopérant avec le basculement du bras primaire permettent le dépôt de ladite charge C sur le côté du véhicule ou de la remorque et, par la manoeuvre inverse, la reprise de cette charge.

Le bras primaire (7) est solidaire d'une structure en forme de berceau (6) intégrée dans l'épaisseur d'un cadre intermédiaire (4) qui est articulé autour d'un axe transversal situé à l'arrière du véhicule pour permettre un bennage classique sur l'arrière le cas échéant.

— Fig. 1 —

La présente invention concerne un dispositif de manutention d'une charge portée par un véhicule ou une remorque et en particulier un dispositif permettant la manutention d'une benne, ou conteneur, ou encore une plate-forme d'échange, depuis le sol, jusque sur le châssis dudit véhicule ou de ladite remorque et inversement.

Les dispositifs de manutention de charge portés par un véhicule sont couramment utilisés pour déposer par exemple une benne à déchets sur le sol. Certains de ces dispositifs se limitent à un dépôt à l'arrière du véhicule. Il est nécessaire pour effectuer ce genre d'opération, de disposer d'une place relativement importante pour positionner la benne. Dans de nombreux cas, en particulier en ville, l'étroitesse des rues et/ou le stationnement des autres véhicules, ne permet pas de déposer une benne en toute sécurité compte-tenu de l'absence de place pour la manoeuvre.

Par ailleurs, ces dispositifs connus consistent en un ensemble de moyens totalement limités à cette application c'est-à-dire au dépôt d'une benne et à sa reprise, à l'arrière du véhicule. Il n'est pas prévu avec ces dispositifs, d'utiliser une benne de façon classique, pour réaliser des opérations de transport et de bennage tant sur l'arrière que sur les côtés.

D'autres dispositifs permettent le dépôt et la reprise de charges sur le côté d'un véhicule. Dans le document FR-A-1 254 634, l'engin de manutention comporte une fourche élévatrice latérale située sensiblement au centre de la carrosserie, et qui permet la manutention de charges sur le côté du véhicule. On remarque cependant que la charge est de dimension limitée à cause de la présence de la fourche.

Un autre document FR-A-2 148 242 présente un dispositif de chargement et déchargement pour camion comportant à chacune des extrémités de sa carrosserie, des organes de manutention qui manoeuvrent une charge en forme de conteneur. Ces organes de manutention sont disposéss à l'avant et à l'arrière de la carrosserie et ne permettent qu'une utilisation bien précise de cette carrosserie : le déchargement ou le chargement de conteneurs d'un côté ou de l'autre du châssis du véhicule.

La présente invention vise à remédier aux inconvénients des systèmes connus ; elle offre en plus la possibilité, lorsqu'il s'agit d'une benne, d'utiliser cette dernière de façon classique, pour déverser son chargement tant à l'arrière que sur les côtés. Elle permet en particulier de charger une benne associée par exemple à un engin de terrassement puis, de prélever cette benne pour la transférer sur un véhicule agricole ou autre permettant son évacuation.

Le dispositif de manutention selon l'invention, comprend notamment des moyens destinés à recevoir des moyens de levage constitués d'une potence munie d'un bras de levage manoeuvré par vérins ; il comporte en particulier, disposé transversalement par rapport à l'axe longitudinal du bâti du véhicule ou de la remorque, et dans la partie médiane de ce dernier, un bras primaire interposé entre ledit bâti et la charge (benne, conteneur, ou plate-forme d'échange), lequel bras est articulé à l'une de ses extrémités, autour d'un axe longitudinal positionné en bordure dudit véhicule et, il est muni, à l'autre extrémité, sur la bordure latérale du véhicule, d'un second axe d'articulation, parallèle audit axe longitudinal, lequel axe d'articulation reçoit un support manoeuvré par un vérin intégré dans ledit bras primaire et ce support peut recevoir les moyens de levage en forme de potence qui, coopérant avec le basculement du bras primaire, permettent le dépôt de ladite charge sur le côté du véhicule ou de la remorque et, par la manoeuvre inverse, la reprise de cette charge disposée sur ledit côté du véhicule ou de la remorque.

Selon une disposition préférentielle de l'invention, le bras primaire comporte, du côté du support, un appendice qui s'étend vers le bas de façon à ce que ledit support se situe, en position normale de repos, sous la charge ; l'axe d'articulation du support sur le bras primaire, se situe en dessous du niveau de l'axe d'articulation dudit bras primaire sur le bâti.

Selon une autre disposition préférentielle de l'invention, le bras primaire du dispositif, est solidaire d'une structure en forme de berceau intégré dans l'épaisseur d'un cadre intermédiaire qui est articulé autour d'un axe transversal situé à l'arrière du véhicule pour permettre un bennage classique sur l'arrière le cas échéant.

Toujours selon l'invention, le support destiné à recevoir les moyens de levage de la charge, est articulé à l'extrémité correspondante du bras primaire, autour d'un axe longitudinal, manoeuvré par au moins un vérin solidaire dudit bras primaire.

Selon une autre disposition de l'invention, le support des moyens de levage, comporte un bras auxiliaire escamotable disposé transversalement par rapport au cadre, et sous la charge, pour en assurer le soutien pendant les manoeuvres de basculement latéral autour de l'axe longitudinal dudit support tant au niveau du cadre, qu'en élévation par rapport à ce dernier, lequel bras auxiliaire est muni d'un dispositif de verrouillage de la charge.

Toujours selon l'invention, le dispositif de manutention comporte au moins une béquille latérale réglable et escamotable, prévenant tout basculement intempestif du véhicule, nuisible à une manipulation précise de la charge ; cette béquille latérale comporte, à son extrémité, une prolonge réglable et escamotable, permettant un appui en fosse.

Selon une autre disposition de l'invention, les moyens de levage sont en forme de potence, constitués d'un mât éventuellement rotatif et d'un bras ou flèche qui est mobile sous l'effet d'au moins un vérin. Pour réduire l'encombrement, en position inactive, la flèche peut se loger à l'intérieur du mât.

Toujours selon l'invention, le cadre intermédiaire comporte des guides en forme de cônes pour la réception et le centrage de la charge appropriée ; ces guides comportent des paliers latéraux centrés sur les axes longitudinaux situés à chaque extrémité du bras primaire, pour permettre un basculement latéral de ladite charge.

Selon une autre disposition de l'invention, le cadre 4 comporte des moyens qui permettent de régler l'écartement longitudinal des guides 45 selon les dimensions de la charge C.

L'invention concerne également la charge associée à ce dispositif de manutention, du type benne ou conteneur, touret ou même plate-forme d'échange ; cette charge comporte, sur au moins un de ses côtés, et en particulier un côté longitudinal une échancrure verticale pour le passage de la potence.

Selon une autre disposition de l'invention, la charge comporte des pieds supports permettant son centrage sur le cadre intermédiaire et en particulier dans les cônes mobiles, et elle est munie sur ses bords longitudinaux, à la partie inférieure, d'axes destinés à coopérer avec les paliers correspondants dudit châssis intermédiaire.

L'invention sera encore illustrée, sans être aucunement limitée, par la description suivante d'un mode de réalisation, associée aux dessins annexés dans lesquels :

- la figure 1 représente, d'une manière schématique, le dispositif de manutention d'une benne, dans sa position déployée pour le dépôt de cette dernière sur le côté du véhicule,
- la figure 1a représente, schématiquement, une variante de réalisation préférentielle de l'invention,
- la figure 1b représente le dispositif complet de manutention d'une charge complétant le mode de réalisation de la figure 1a,
- la figure 2 illustre, de façon schématique, vu de dessus, le dispositif de manutention, et, en traits mixtes fins, une benne disposée sur le côté du véhicule,
- la figure 3 représente le dispositif de manutention dans une configuration particulière de levage d'une benne, sur le côté d'un véhicule,
- la figure 4 représente le bras auxiliaire support d'une benne associé au dispositif de manutention, tel que représenté figure 3,
- les figures 5, 6 et 7 représentent les différentes positions prises par la benne, pour une utilisation classique de vidage par l'arrière (figure 5), sur le côté gauche (figure 6), ou sur le côté droit (figure 7),
- la figure 8 illustre un autre mode d'utilisation de la benne, en position levée et basculante permettant par exemple un déchargement latéral en hauteur.
- la figure 9 illustre une opération de manutention d'un conteneur muni de roulettes pour le déplacer par roulement sur le côté du véhicule.

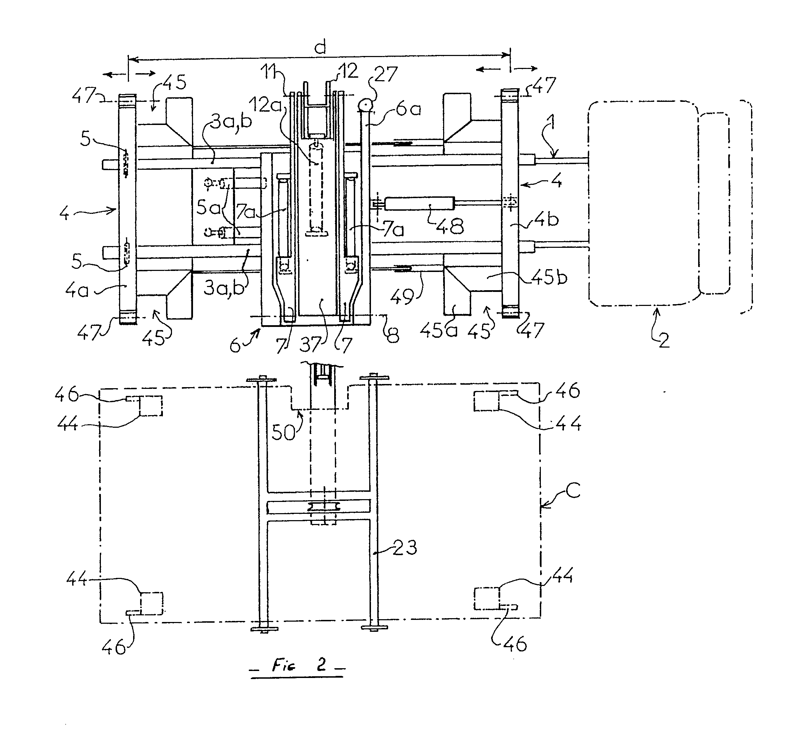

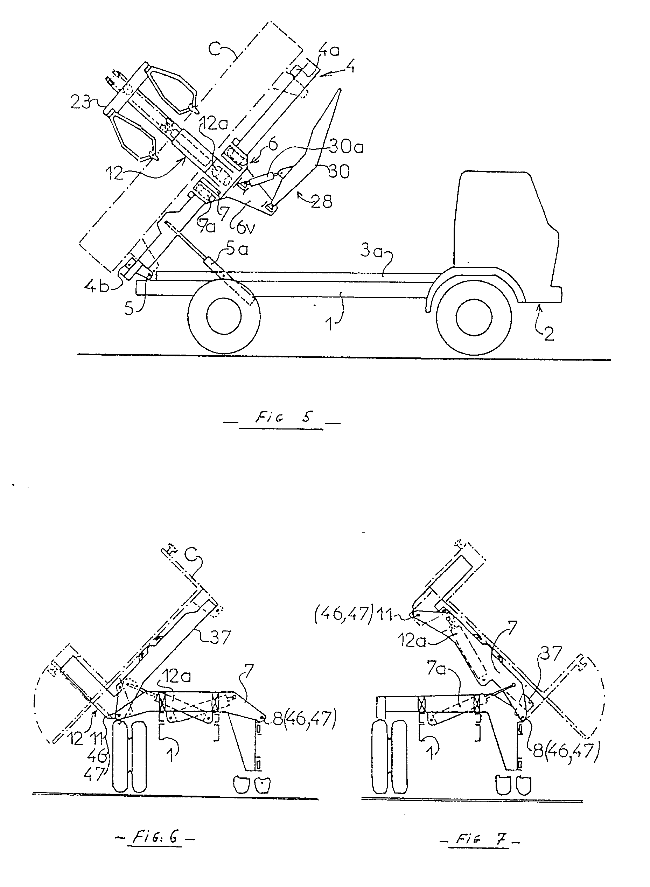

Le dispositif de manutention, tel que représenté sur les figures, et en particulier la figure 5, est implanté sur le bâti 1 d'un véhicule 2. Ce dispositif de manutention comporte un châssis intermédiaire 3 constitué de longerons fixes 3a solidaires dudit bâti 1 et il comporte des longerons b formant, avec des traverses avant 4a et arrière 4b, un cadre intermédiaire 4 servant de support à la charge C. Cette charge est arimée au cadre par des moyens détaillés plus loin. Le cadre 4 est articulé sur les extrémités des longerons 3a, à la partie arrière du bâti 1, autour d'un axe transversal 5 pour réaliser, de façon classique, un basculement de la charge et un vidage vers l'arrière au moyen d'un ou plusieurs vérins 5a interposés entre le bâti 1 et le cadre 4. On remarque, figure 2, l'axe d'articulation 5 du cadre 4 sur le bâti 1, et deux vérins 5a de manoeuvre dudit cadre 4.

A mi-longueur des longerons 3b du cadre 4, on trouve une structure 6, disposée transversalement par rapport au véhicule, divisant ledit cadre en deux parties : une partie avant et une partie arrière. Cette structure 6 se situe sensiblement dans l'épaisseur du cadre 4 et elle sert de berceau à un bras primaire 7 transversal articulé autour d'un axe longitudinal 8 disposé sur le côté du véhicule. Ce bras primaire 7 est logé entre le bâti 1 du véhicule et la charge C, dans l'épaisseur du cadre 4 également.

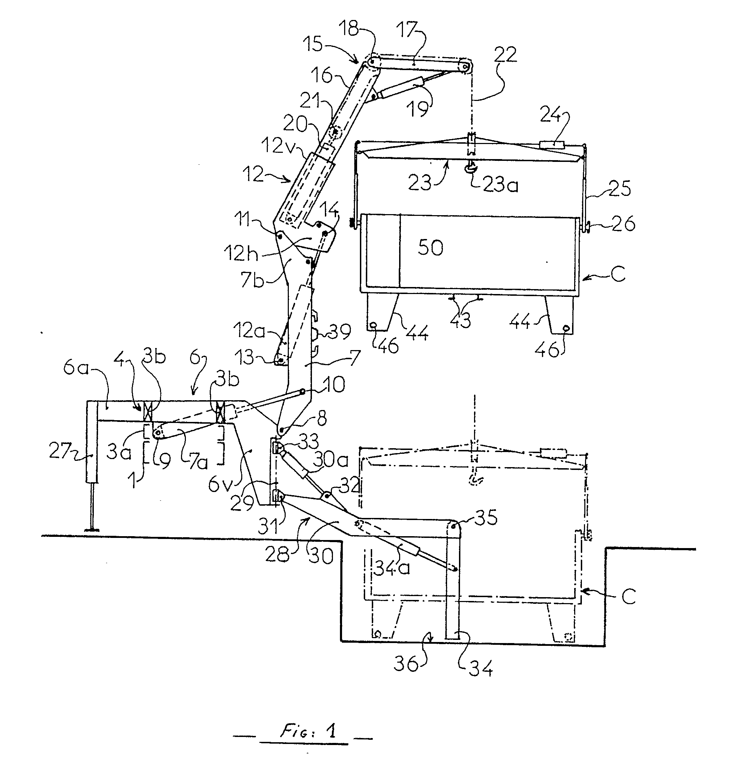

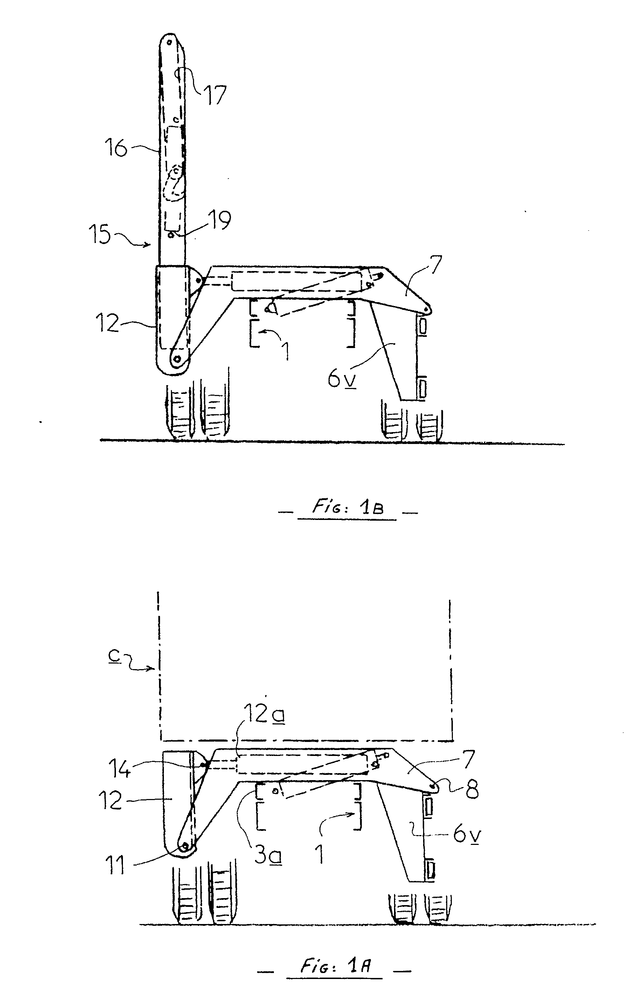

L'axe d'articulation 8 du bras primaire 7 est solidaire du berceau 6, à l'une de ses extrémités latérales. Ce berceau 6 apparaît notamment figure 1 ; il se présente sous la forme d'un L dont le grand côté est positionné de façon horizontalement en travers du bâti 1 du véhicule. Ce grand côté horizontal du berceau 6 est en forme de cuvette, ouverte vers le haut, pour recevoir et loger le bras primaire 7. Ce bras primaire 7 est mobile autour de l'axe transversal 8 situé dans l'angle du L constituant le berceau 6. Le mouvement du bras 7 est obtenu par au moins un vérin 7a interposé entre une articulation 9 disposée sous le berceau 6 et une articulation 10 disposés sur ledit bras, en un point situé à proximité de l'articulation 8. De préférence, le bras primaire 7 est mobile sous l'effet de deux vérins 7a disposée de part et d'autre dudit bras, et logés dans le berceau 6 également.

Le bras 7 comporte à son autre extrémité sur la bordure latérale du véhicule, un axe d'articulation 11 longitudinal également, parallèle à l'axe d'articulation 8. Les axes 8 et 11 se situent, lorsque le bras 7 est au repos dans le berceau 6, dans un plan horizontal qui est à mi-distance entre le bâti 1 et ledit berceau 6. Cet axe d'articulation 11 reçoit un support 12 qui est mobile par rapport au bras primaire 7 sous l'effet d'au moins un vérin 12a disposé dans ledit bras primaire et articulé sensiblement au centre de ce dernier, par un axe 13, pour intervenir sur le support 12 au niveau d'un axe d'articulation 14. Le support 12 est en forme de L ; l'axe d'articulation 11 se situant dans l'angle dudit L et l'axe d'articulation 14 du vérin 12a se situant sensiblement à l'extrémité de la petite branche 12h de la forme en L. Cette petite branche 12a est enserrée dans la chape 7b qui est conformée à l'extrémité du bras primaire 7.

Le support 12 est destiné à recevoir une potence 15 éventuellement rotative sur son axe vertical. Cette potence comporte un mât 16 de section tubulaire par exemple qui s'encastre dans la branche 12v du support 12, de section équivalente. L'extrémité supérieure du mât 16 comporte une flèche 17 articulée autour d'un axe 18 sur ledit mât et mobile sous l'effet d'au moins un vérin 19 interposé entre le mât et l'extrémité de la flèche 17. On a représenté, figure 1, à l'intérieur du mât 16, un vérin 20 muni d'au moins une poulie 21 permettant la manoeuvre du câble 22 ou chaîne d'arrimage de la charge C représentée sous forme de benne.

La charge C est arrimée, de préférence, au moyen d'un palonnier 23 comportant un vérin 24 de commande d'accrochage automatique des bras latéraux 25 qui coopèrent avec des crochets 26 disposés de chaque côté de ladite charge C. Le palonnier 23 peut aussi comporter, comme représenté figure 1, un crochet tournant 23a qui permet un accrochage central de la charge.

La figure 1a représente un mode de réalisation préférentielle dans lequel le bras primaire 7 comporte un axe d'articulation 11 situé à un niveau nettement inférieur à celui de l'axe d'articulation 8 situé à l'autre extrémité du bras primaire 7. Cette disposition permet de loger le support 12 totalement sous la charge C. Le support 12 est manoeuvré par le vérin 12a qui agit sur l'axe 14 situé à la partie supérieure dudit support. Cette disposition permet de loger sur le châssis un conteneur ou une benne classique.

On a représenté, figure 1b, une potence 15 encastrée dans le support 12. Cette potence 15 est escamotable facilement. Son encombrement est réduit au maximum ; en effet on remarque, figure 1b, que la flèche s'escamote totalement dans l'épaisseur du mât 16. Ce mât 16 a une section en U pour loger la flèche 17, et le vérin 19 de cette flèche.

Pour offrir une bonne stabilité du véhicule pendant les différentes manoeuvres, on remarque, figure 1, que le berceau 6 comporte, du côté gauche, une prolonge 6a qui maintient une béquille escamotable 27. De l'autre côté, la branche verticale 6v du berceau 6, comporte une béquille réglable 28, articulée autour d'un axe vertical 29. Cette béquille 28 comporte un pied 30 articulé autour d'un axe 31 perpendiculaire à l'axe 29, lequel pied 30 est soumis à l'action d'un vérin 30a interposé entre ce dernier et la partie supérieure de l'aile 6v du berceau 6. Ce vérin 30a est articulé autour d'un axe 33 perpendiculaire à l'axe vertical 29, sur la branche 6v du berceau, sous l'axe du plot 39 ; les ailes horizontales des profilés 43 coopèrent avec les crochets 40, 41, pour verrouiller cette charge C. Un mouvement de la charge C est possible dans un sens perpendiculaire au bras ,c'est-à-dire dans le sens longitudinal du véhicule.

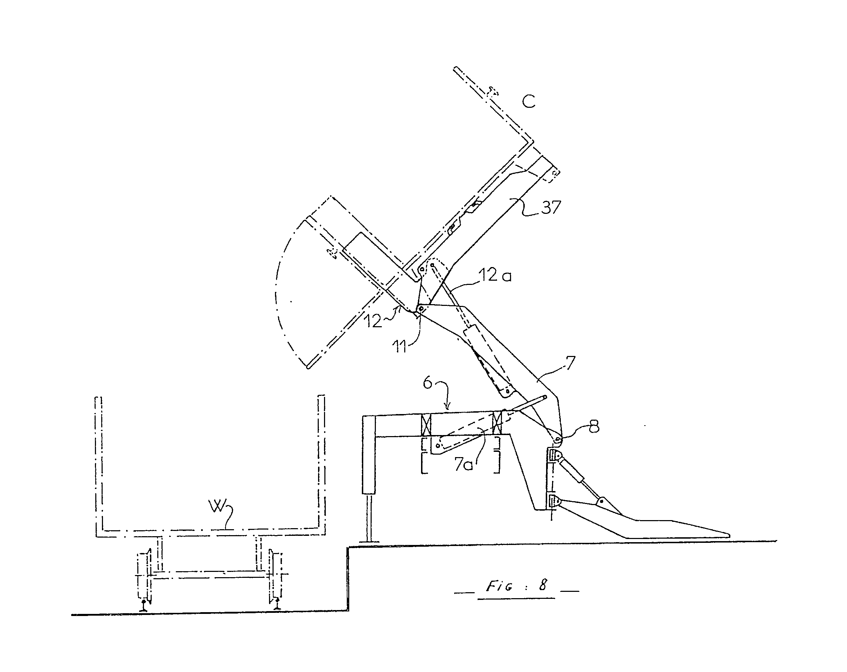

On remarque, qu'au moyen de ce bras auxiliaire 37, la charge C peut être basculée du côté gauche du véhicule, tel que représenté figure 6. Ce basculement s'effectue au moyen du vérin 12a interposé entre le bras primaire 7 et le support 12, logé dans ledit bras primaire 7, sous le bras auxiliaire 37. Le mouvement s'effectue autour de l'axe longitudinal d'articulation 11 interposé entre le bras primaire 7 et le support 12.

Le basculement latéral de la charge C, sur le côté droit du véhicule, figure 7, s'effectue au moyen du vérin de manoeuvre 7a interposé entre le berceau 6 et le bras primaire 7. Dans ce cas de figure, le bras auxiliaire 37 assure le maintien en position de la charge 7 par rapport au dispositif de basculement.

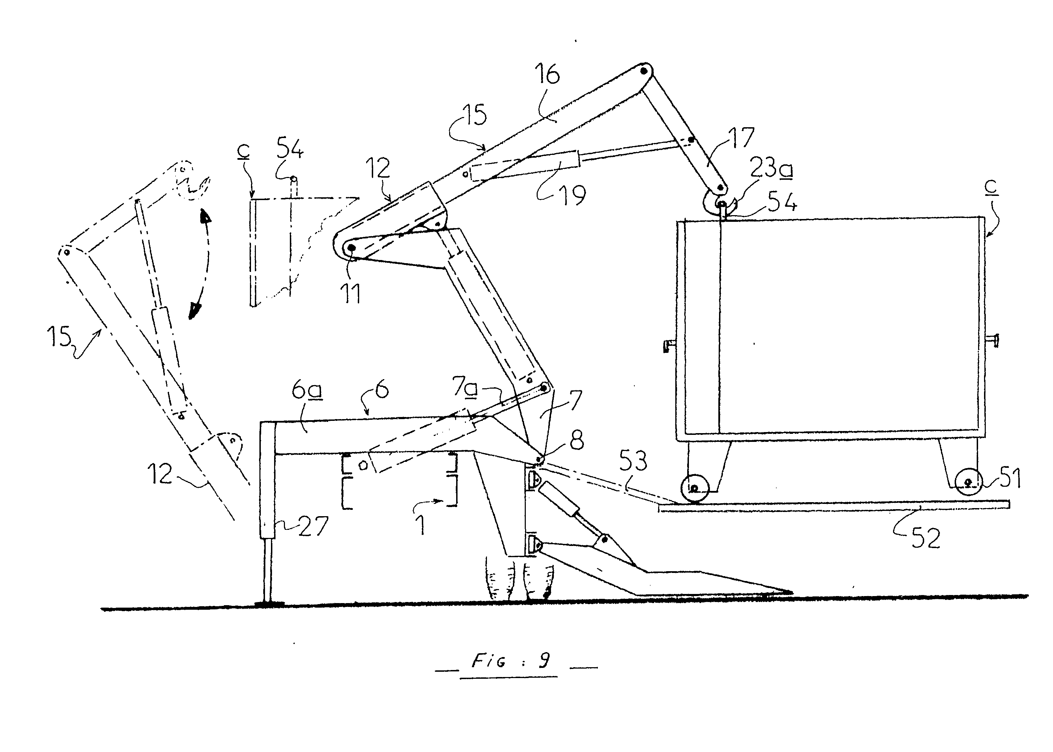

La figure 8 présente une possibilité de déchargement latéral surélevé d'une charge C. Cette charge est élevée au moyen du vérin 7a interposé entre le berceau 6 et le bras primaire 7 et elle est basculée ensuite au moyen du vérin 12a interposé entre ledit bras primaire 7 et le support 12 sur lequel est fixé le bras auxiliaire 37 qui maintient en position ladite charge C. Par cette disposition on peut déverser le contenu d'une charge C en forme de benne dans un wagon W représenté en traits mixtes fins ou dans un conteneur quelconque.

Lors de sa mise en place sur le véhicule ou sur une remorque, la charge C se centre automatiquement. Cette charge C comporte de préférence, figures 1 et 2, des pieds 44 disposés sensiblement au niveau de ses coins. Ces pieds 44 ont une forme qui leur permet de venir se centrer sur des guides 45 disposés aux quatre coins du cadre 4 du dispositif de manutention. Ces guides 45, en forme de cônes, sont constitués de deux pans inclinés 45a et 45b qui permettent un guidage et surtout un centrage automatique de la charge C latéral 8 et autour d'un axe 32 sur le pied 30. Ce pied 30 est conformé pour s'intégrer facilement sous la charge C lorsque cette dernière possède des pieds comme c'est le cas sur la figure, c'est-à-dire qu'il forme un dièdre dont une partie est inclinée et l'autre normalement horizontale en position active.

Tel que représenté figure 1, pour illustrer une des possibilités complémentaires de l'invention, le pied 30 comporte une jambe complémentaire 34, articulée à son extrémité autour d'un axe 35, laquelle jambe est destinée à venir prendre appui dans une fosse 36 pour permettre une mise en place de la charge C au fond de cette fosse. Le pied 34 se situe à une distance du véhicule 2 qui correspond sensiblement à l'aplomb de l'extrémité de la flèche 17. Le pied 34 est soumis à l'action d'un vérin 34a interposé entre la jambe 30 et ledit pied. Ce pied 34 peut comporter un dispositif complémentaire de type télescopique pour faciliter son réglage en hauteur, du genre vérin par exemple, non représenté.

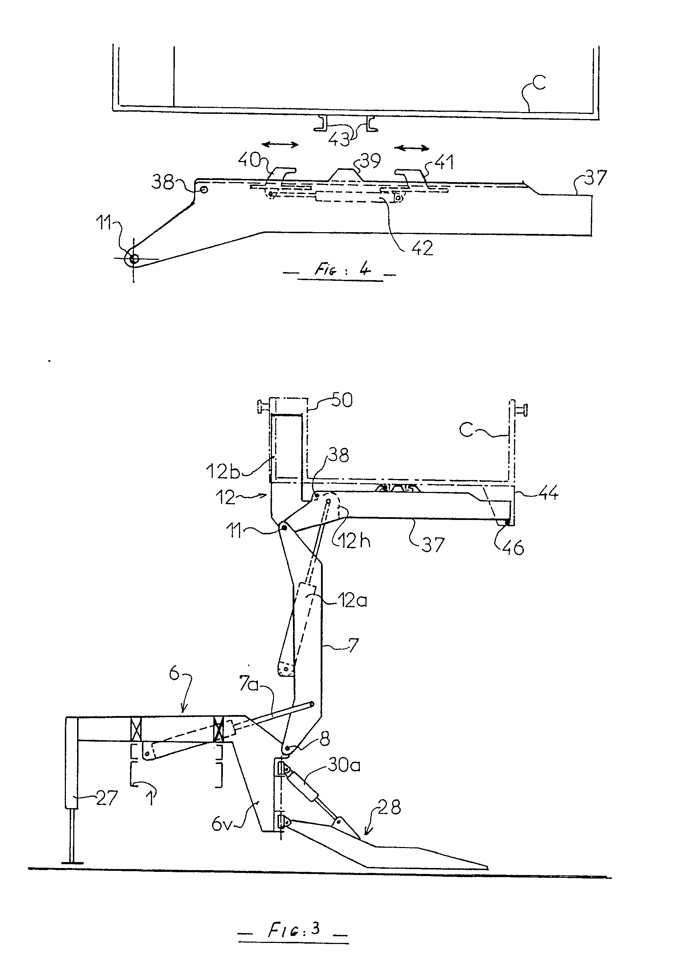

Le dispositif de manutention apparaît figure 3 sans la potence 15. Dans cette configuration, la charge C est soutenue au moyen d'un bras auxiliaire 37, fixé au support 12. Ce bras 37 est en fait fixé sur l'axe 11 d'articulation de la potence sur le bras primaire 7 et, au moyen de butées 38, sur la branche la plus courte 12h du support 12. Ce bras auxiliaire 37 se loge dans le bras primaire 7 ; ce dernier est en forme de U ouvert sur le dessus. Le bras auxiliaire 37 constitue une prolonge du petit bras 12h du support 12 ; il est disposé à l'équerre de ce dernier. Ce bras auxiliaire 37 comporte des moyens de maintien et de verrouillage de la charge C. Ces moyens de maintien et de verrouillage sont constitués d'un plot 39 de centrage de la charge C et de deux crochets 40 et 41 mobiles sur le bras 37 dans le sens de sa longueur sous l'effet d'un vérin 42 installé entre les deux crochets. La charge C comporte, à sa partie inférieure, deux profilés 43 à section en équerre, qui sont espacés l'un de l'autre pour permettre un centrage de la charge C par rapport au bras 37 au moyen par rapport au dispositif de manoeuvre. On remarque, figure 1, sur les pieds 44, des axes 46 qui sont disposés longitudinalement à l'extérieur desdits pieds 44. Ces axes 46 sont destinés à coopérer avec des paliers latéraux 47 disposés aux quatre coins du cadre 4 du véhicule sur des traverses 4a, 4b, disposées respectivement en arrière et en avant dudit cadre 4, aux extrémités des longerons 3b. Ces paliers 47 sont centrés, de chaque côté du véhicule, sur les axes 8 et 11 disposés à chaque extrémité du bras primaire 7. Ces paliers 47 assurent le guidage de la charge C lors du basculement latéral à droite ou à gauche du véhicule, figures 7 et 6 respectivement.

Pour permettre une adaptation du véhicule ou de la remorque à différents gabarits de charge ou de benne, le cadre 4 du dispositif de manutention comporte des moyens qui permettent de régler l'écartement longitudinal des guides 45 par rapport au positionnement du berceau 6. Ces moyens consistent en un premier vérin 48 interposé entre la traverse avant 4b et le berceau 6 afin de faire avancer ou reculer la charge C par rapport à la partie médiane. Un deuxième jeu de vérins ou d'entretoises 49 est disposé de part et d'autre du châssis 3, pour régler l'écartement entre les guides 45 disposés en avant et en arrière du châssis au niveau des traverses 4a et 4b selon la dimension d nécessaire. Cette possibilité de mouvement longitudinal des guides, permet de manoeuvrer plus facilement la charge dans les terrains ou dans les rues en pente.

On remarque, figures 1 et 2, que la charge C comporte, sur l'un de ses côtés longitudinaux, un renfoncement 50 qui contourne la branche verticale 12v du support 12. Cette branche verticale 12v s'intègre dans la largeur de la charge C pour maintenir, au niveau du véhicule, un gabarit classique.

La description et les dessins représentés montrent le dispositif déposant à droite du véhicule, bien entendu le dispositif peut aussi bien déposer à gauche du véhicule, c'est un choix qui est défini par l'utilisateur.

La figure 9 illustre la manoeuvre de chargement d'une charge C en forme de bac muni de roulettes 51. Cette charge C peut se trouver à un niveau supérieur au sol, sur une plateforme 52 dépendante ou non du véhicule. On a représenté, en traits mixtes fins, une rampe 53 interposée entre la plateforme 52 et le véhicule 1 de façon à guider les roulettes 51 de la charge C pendant sa manoeuvre au moyen de la potence 15. La charge C comporte une ou plusieurs anses 54 qui coopèrent avec le crochet 23a disposé en bout du bras 17. Lorsque la charge C est en place sur le véhicule 1, on remarque, figure 9, que la potence 15 est en position basculée latéralement. Cette potence 15 peut éventuellement être dégagée de son support 12, lequel support peut alors être remis dans sa position normale sous la charge C.

Les signes de référence insérés après les caractéristiques techniques mentionnées dans les revendications ont pour seul but de faciliter la compréhension de ces dernières, et n'en limitent aucunement la portée.

## Revendications

1.- Dispositif de manutention d'une charge portée par un véhicule ou une remorque, utilisant par exemple, une potence, disposée transversalement par rapport à l'axe longitudinal du bâti (1) du véhicule ou de la remorque, comprenant un bras primaire (7) interposé entre le bâti (1) et la charge C, lequel bras est articulé à l'une de ses extrémités, autour d'un axe longitudinal (8) positionné en bordure dudit véhicule ou remorque, caractérisé en ce que ce bras primaire (7) s'étend transversalement sur le véhicule, sous la charge et comporte, à son autre extrémité sur la bordure latérale du véhicule, un axe d'articulation (11) parallèle à l'axe longitudinal (8), sur lequel axe (11) est articulé un support (12) manoeuvré par au moins un vérin (12a) solidaire dudit bras primaire (7), lequel support (12) est notamment destiné à recevoir les moyens de levage en forme de potence qui, coopérant avec le basculement du bras primaire (7), permettent le dépôt de ladite charge C sur le côté du véhicule ou remorque et, par la manoeuvre inverse, la reprise de cette charge.

2.- Dispositif de manutention selon la revendication 1, caractérisé en ce qu'il comporte un bras support (12) articulé sur un axe (11) disposé à l'extrémité du bras primaire (7), lequel axe (11) est situé à un niveau nettement inférieur à celui de l'axe longitudinal (8) situé à l'autre extrémité du bras primaire, de façon à loger ledit support (12) sous la charge C.

3.- Dispositif de manutention selon la revendication 2, caractérisé en ce que le support (12) des moyens de levage, comporte un bras auxiliaire (37) escamotable, disposé transversalement par rapport au cadre (4), sous la charge, pour assurer le soutien de cette dernière pendant les manoeuvres de basculement latéral autour des axes longitudinaux (11 et 8) pour benner au niveau du cadre (4) ou en élévation le cas échéant, lequel bras auxiliaire (37) est muni d'un dispositif de verrouillage de ladite charge C, constitué de deux crochets (40, 41) mus par un vérin (42) et d'un plot de centrage (39) coopérant avec deux profilés (43) à section en équerre disposés sous la charge C.

4.- Dispositif de manutention selon l'une quelconque des revendications 1 à 3, caractérisé en ce qu'il comporte un bras primaire (7) solidaire d'une structure en forme de berceau (6) intégrée dans l'épaisseur d'un cadre intermédiaire (4) qui est articulé autour d'un axe transversal (5) situé à l'arrière du véhicule pour permettre un bennage classique sur l'arrière le cas échéant.

5.- Dispositif de manutention selon l'une quelconque des revendications 1 à 4, caractérisé en ce qu'il comporte au moins une béquille latérale (27, 28), réglable et escamotable, prévenant tout basculement intempestif du véhicule, l'une au moins de ces béquilles étant munie à son extrémité, d'une prolonge (34) réglable et escamotable permettant un appui en fosse.

6.- Dispositif de manutention selon l'une quelconque des revendications 1 à 5, caractérisé en ce que les moyens de levage sont en forme de potences, constitués d'un mât (16) et d'une flèche (17), mobile sous l'effet d'au moins un vérin, la manoeuvre de la charge C s'effectuant, au moyen d'un câble ou d'une chaîne mûe par un vérin (20) disposé à l'intérieur du mât (16), l'extrémité du câble ou de la chaîne étant solidaire d'un palonnier (23) muni de moyens d'accrochage automatique de la charge C, et/ou d'un crochet central (23a).

7.- Dispositif de manutention selon l'une quelconque des revendications 1 à 6, caractérisé en ce que le cadre (4) comporte des guides (45) en forme de cônes, pour la réception et le centrage d'une charge C appropriée ; ces guides (45) comportent des paliers latéraux (47) centrés sur les axes longitudinaux (8 et 11) situés à chaque extrémité du bras primaire (7), pour permettre un basculement latéral de ladite charge C.

8.- Dispositif de manutention selon la revendication 7, caractérisé en ce que le cadre (4) comporte des moyens de réglage de l'écartement longitudinal des guides (45) de positionnement de la charge C, ces moyens étant constitués d'au moins un jeu de vérins ou d'entretoises (49) et d'autre part des moyens de réglage de la position du berceau (6) par rapport à la traverse avant (4b), lesquels moyens sont constitués d'un vérin (48) interposé.

9.- Charge du type benne ou conteneur, touret ou plate-forme d'échange, associée à un dispositif de manutention selon l'une quelconque des revendications 1 à 8, caractérisée en ce qu'elle comporte, sur au moins un de ses côtés, et en particulier un côté longitudinal, un renfoncement ou échancrure (50) qui permet le passage du support de potence (12).

10.- Charge selon la revendication 9, caractérisée en ce qu'elle comporte des pieds supports (44) permettant son centrage sur les guides (45) du cadre intermédiaire (4) et, sur lesdits pieds (44) des axes (46) coopérant avec les paliers (47) dudit cadre intermédiaire (4) pour réaliser un basculement à droite ou à gauche de la charge.

— _Fig. 1_ —

_ *Fig: 1B* _

_ *Fig: 1A* _

Fig 2

— Fig : 4 —

— Fig : 3 —

_ Fig 5 _

— Fig. 6 —

_ Fig 7 _

Fig : 8

_ FiG : 9 _

EP 0 434 880 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-2014986 (S.KIRMA) <br> * le document en entier * | 1, 5 | B60P1/64 |
| A | | 6 | |
| A | GB-A-1210775 (ACKERMANN FAHRZEUGBAU) <br> * page 4, lignes 68 - 100; figures 1-6 * | 1, 5-7 | |
| D,A | FR-A-1254634 (J.LOMBARDI) <br> * le document en entier * | 1, 5 | |
| A | FR-E-79480 (P.GOUIN) <br> * figures 1-4 * | 1, 4 | |
| A | FR-A-1573597 (K.KLAUS) <br> * figures 1-4 * | 8 | |

DOMAINES TECHNIQUES
RECHERCHES (Int. Cl.5)

B60P

Le présent rapport a été établi pour toutes les revendications

| Lieu de la recherche | Date d'achèvement de la recherche | Examinateur |
|---|---|---|
| LA HAYE | 23 AOUT 1990 | CZAJKOWSKI A.R. |

EPO FORM 1503 03.82 (P0402)